# EUROPÄISCHE PATENTSCHRIFT

(11) **EP 4 337 478 B1**
(45) Veröffentlichungstag und Bekanntmachung des Hinweises auf die Patenterteilung: **09.07.2025**
(21) Anmeldenummer: 22731481.2
(22) Anmeldetag: 03.05.2022
(51) Int. Cl.: B60G 7/00, B66F 9/06, B66F 9/075, B25J 5/00, B62D 11/04, B60G 9/02, B62D 61/10, B62D 63/02

(54) **MOBILES TRANSPORTSYSTEM**
MOBILE TRANSPORT SYSTEM
SYSTÈME DE TRANSPORT MOBILE

(30) Priorität: 14.05.2021 CN 202110533637; 06.07.2021 DE 102021003472
(43) Veröffentlichungstag der Anmeldung: 20.03.2024
(73) Patentinhaber: SEW-EURODRIVE GmbH & Co. KG, 76646 Bruchsal (DE)
(72) Erfinder: WEIHUA, Ren, Tianjin (CN)
(86) Internationale Anmeldenummer: PCT/EP2022/025201
(87) Internationale Veröffentlichungsnummer: WO 2022/238005

(56) Entgegenhaltungen:
- EP-A1- 3 770 046
- EP-A2- 3 659 755
- WO-A1-2019/020862
- JP-A- H03 186 468
- JP-A- S60 252 061

## Beschreibung

Die Erfindung betrifft ein mobiles Transportsystem zum Transport von Gegenständen in einer technischen Anlage umfassend einen Mittelrahmen, ein Paar erste Stützräder, ein Paar zweite Stützräder, ein Paar Antriebsräder und einen Unterrahmen, welcher um eine in Querrichtung verlaufende Pendelachse relativ zu dem Mittelrahmen schwenkbar ist.

In technischen Anlagen, beispielsweise in Produktionswerken, werden mobile Transportsysteme, insbesondere autonom fahrende mobile Transportsysteme, zum Transport von Gegenständen, beispielsweise Kleinteilen oder Kisten eingesetzt. Die besagten mobilen Transportsysteme bringen unter anderem Bauteile von Logistikbereichen, wie beispielsweise einem Materiallager, zu Arbeitsplätzen, wo die Bauteile verarbeitet werden. Mobile Transportsysteme sind in der Lage, leichte Steigungen oder Gefälle sowie kleine Bodenschwellen oder ähnliche Hindernisse zu überwinden.

Aus dem Dokument DE 10 2020 000 746 A1 ist ein fahrerloses Transportfahrzeug bekannt. Das fahrerlose Transportfahrzeug weist ein Fahrwerk mit einem Gestell auf, an welchem eine Schwinge gelagert ist. Das fahrerlose Transportfahrzeug umfasst ferner zwei Antriebräder und mehrere Stützrollen. Zum Anheben sowie zum Absenken von zu transportierenden Gegenständen weist das fahrerloses Transportfahrzeug eine Aufnahmeplatte auf, welche höhenverstellbar ist.

Aus der JP 2005306178 A ist ein fahrerloses Fahrzeug bekannt, welches ein rechtes und ein linkes Antriebsrad aufweist. Das Fahrzeug umfasst auch eine Lenkeinheit zum Ausrichten der Antriebsräder.

Aus der WO 2019/020862 A1 ist ein Fahrwerk für ein Fahrzeug bekannt, welches einen ersten Rahmen, einen zweiten Rahmen und einen dritten Rahmen aufweist. Die Rahmen sind dabei übereinander angeordnet.

Aus der DE 10 2014 015 317 A1 ist ein Fahrzeug zum Transport von Gegenständen bekannt. Das Fahrzeug umfasst ein Aufnahmeteil, ein Gestell und eine Schwinge, welche übereinander angeordnet sind.

Aus der JP H 3186468 A ist ein Fahrzeug mit einem Fahrwerk bekannt. Das Fahrwerk umfasst angetriebene Räder und antreibende Räder, die an gegenüberliegenden Enden eines schwenkbaren Hebels angeordnet sind.

Aus der DE10 2017 201 108 A1 ist ein mobiles Transportsystem bekannt, welches als Flurförderfahrzeug ausgebildet ist und ein erstes Stützrad an einem vorderen Ende, ein zweites Stützrad an einem hinteren Ende sowie ein dazwischen angeordnetes Antriebsrad aufweist.

Aus der EP 3 770 046 A1 ist ein fahrerloses Transportsystem gemäß dem Oberbegriff des Anspruchs 1 bekannt, welches ein Chassis,
Antriebsräder und Stützräder umfasst. Die Räder sind um verschiedene Achsen relativ zu dem Chassis schwenkbar.

Aus der JP S6-0252061 A ist ein automatischer Transportwagen bekannt. Der Transportwagen umfasst Antriebsräder und Stützräder.

Aus der EP 3 659 755 A2 ist eine omnidirektionale Plattform für ein Fahrzeug bekannt. Die Plattform umfasst zwei Antriebsräder und zwei Stützräder.

Der Erfindung liegt die Aufgabe zugrunde, ein mobiles Transportsystem zum Transport von Gegenständen weiterzubilden.

Die Aufgabe wird durch ein mobiles Transportsystem mit den im Anspruch 1 angegebenen Merkmalen gelöst. Vorteilhafte Ausgestaltungen und Weiterbildungen sind Gegenstand der Unteransprüche.

Ein erfindungsgemäßes mobiles Transportsystem zum Transport von Gegenständen in einer technischen Anlage umfasst einen Mittelrahmen, ein Paar erste Stützräder, ein Paar zweite Stützräder, ein Paar Antriebsräder und einen Unterrahmen, welcher um eine in Querrichtung verlaufende Pendelachse relativ zu dem Mittelrahmen schwenkbar ist. Dabei sind die Antriebsräder an dem Unterrahmen befestigt, die zweiten Stützräder sind an dem Unterrahmen befestigt, und die ersten Stützräder sind an einem Kipphebel befestigt, welcher um eine in Längsrichtung verlaufende Kippachse relativ zu dem Mittelrahmen schwenkbar ist. Ein Abstand der zweiten Stützräder in Längsrichtung zu den Antriebsrädern ist größer als ein Abstand der ersten Stützräder in Längsrichtung zu den Antriebsrädern.

Durch die erfindungsgemäße Ausgestaltung des mobilen Transportsystems ist sichergestellt, dass die Antriebsräder stets gleichen Anpressdruck auf den Boden haben. Unter allen Bedingungen, auch bei der Überwindung von Steigungen mit gleichzeitigen Bodenunebenheiten quer zu einer Fahrtrichtung, haben stets mindestens fünf der sechs Räder des mobilen Transportsystems Kontakt zu dem Boden. Ein Einsatz von Federn, um einen bestimmten Anpressdruck der Räder auf den Boden zu erreichen, ist nicht erforderlich. In Abhängigkeit von der Beschaffenheit des Bodens verliert höchstens eines der Räder den Kontakt zum Boden. Somit ist das mobile Transportsysteme in der Lage, Bodenunebenheiten quer zur Fahrtrichtung auszugleichen.

Gemäß einer vorteilhaften Ausgestaltung der Erfindung sind die ersten Stützräder in Querrichtung versetzt zueinander angeordnet. Gemäß einer vorteilhaften Ausgestaltung der Erfindung sind auch die zweiten Stützräder in Querrichtung versetzt zueinander angeordnet.

Gemäß einer bevorzugten Ausgestaltung der Erfindung sind die ersten Stützräder jeweils um eine in Vertikalrichtung verlaufende Schwenkachse relativ zu dem Kipphebel schwenkbar und um eine in eine horizontale Richtung verlaufende Drehachse relativ zu dem Kipphebel drehbar gelagert. Derartig ausgebildete Stützräder sind verhältnismäßig kostengünstig und erleichtern zudem Kurvenfahrten des mobilen Transportsystems.

Gemäß einer bevorzugten Ausgestaltung der Erfindung sind die zweiten Stützräder jeweils um eine in Vertikalrichtung verlaufende Schwenkachse relativ zu dem Unterrahmen schwenkbar und um eine in eine horizontale Richtung verlaufende Drehachse relativ zu dem Unterrahmen drehbar gelagert. Derartig ausgebildete Stützräder sind verhältnismäßig kostengünstig und erleichtern zudem Kurvenfahrten des mobilen Transportsystems.

Gemäß einer vorteilhaften Weiterbildung der Erfindung ist an den ersten Stützrädern und/oder an den zweiten Stützrädern jeweils eine Bremseinrichtung angeordnet, mittels welcher eine Drehung des jeweiligen Stützrades um eine in horizontale Richtung verlaufende Drehachse bremsbar ist. Damit ist eine Bremsung des mobilen Transportsystems annähernd unabhängig von der Beschaffenheit des Bodens jederzeit möglich.

Gemäß einer vorteilhaften Ausgestaltung der Erfindung sind die Antriebsräder jeweils um eine in Querrichtung verlaufende Antriebsachse relativ zu dem Unterrahmen drehbar gelagert und von Antriebsmotoren unabhängig voneinander antreibbar sind. Durch Antrieb der Antriebsräder mit unterschiedlichen Drehzahlen sind Kurvenfahrten ermöglicht.

Gemäß einer vorteilhaften Weiterbildung der Erfindung weist das mobile Transportsystem einen ersten Winkelmesser zur Erfassung eines Schwenkwinkels des Unterrahmens um die Pendelachse relativ zu dem Mittelrahmen auf. Damit ist eine Erkennung von Steigungen sowie Gefällen ermöglicht.

Gemäß einer vorteilhaften Weiterbildung der Erfindung weist das mobile Transportsystem einen zweiten Winkelmesser zur Erfassung eines Schwenkwinkels des Kipphebels um die Kippachse relativ zu dem Mittelrahmen auf. Damit ist eine Erkennung von Unebenheiten im Boden ermöglicht.

Gemäß einer vorteilhaften Ausgestaltung der Erfindung sind die Antriebsräder in Längsrichtung zwischen den ersten Stützrädern und den zweiten Stützrädern angeordnet.

Gemäß einer vorteilhaften Weiterbildung der Erfindung weist das mobile Transportsystem eine Empfangseinheit auf, zu welcher Energie induktiv von einer Ladeeinheit übertragbar ist. Die Ladeeinheit ist beispielsweise als linienförmiger Leiter oder als Spule ausgebildet und befindet sich stationär in dem Boden. Die von der Ladeeinheit zu der Empfangseinheit induktiv übertragene Energie dient beispielsweise zum Laden eines elektrischen Energiespeichers des mobilen Transportsystems.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine perspektivische Darstellung eines mobilen Transportsystems,
- Figur 2:: eine perspektivische Darstellung von Strukturteilen eines mobilen Transportsystems,
- Figur 3:: eine perspektivische Darstellung einer Hubeinheit des mobilen Transportsystems,
- Figur 4:: eine perspektivische Darstellung eines Mittelrahmens,
- Figur 5:: eine perspektivische Darstellung eines Fahrwerks des mobilen Transportsystems,
- Figur 6:: eine Ansicht einer Unterseite des mobilen Transportsystems und
- Figur 7:: eine Seitenansicht eines Fahrwerks des mobilen Transportsystems.

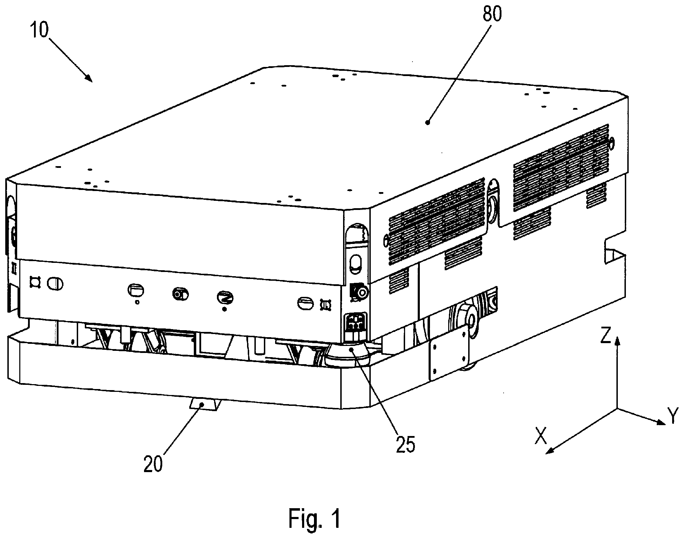

Figur 1 zeigt eine perspektivische Darstellung eines mobilen Transportsystems 10. Das mobile Transportsystem 10 dient vorliegend zum Transport von Gegenständen in einer technischen Anlage. Bei der technischen Anlage handelt es sich um eine industrielle Anwendung, beispielsweise ein Produktionswerk. Das Transportsystem 10 dient beispielsweise auch zur Lieferung von Waren zu einem Wohnhaus eines privaten Empfängers in einer Stadt oder in einem Wohngebiet. Bei dem mobilen Transportsystem 10 handelt es sich vorliegend um ein autonom fahrendes Fahrzeug.

Das mobile Transportsystem 10 befindet sich in der hier gezeigten Darstellung auf einem ebenen Boden. Eine Längsrichtung X entspricht dabei zumindest annähernd der gewöhnlichen Fahrtrichtung des mobilen Transportsystems 10. Eine Querrichtung Y verläuft rechtwinklig zu der Längsrichtung X. Die Längsrichtung X und die Querrichtung Y stellen horizontale Richtungen dar und verlaufen parallel zu dem Boden, auf welchem das mobile Transportsystem 10 sich befindet. Eine Vertikalrichtung Z steht senkrecht auf dem Boden und verläuft somit rechtwinklig zu der Längsrichtung X und rechtwinklig zu der Querrichtung Y. Jede Richtung rechtwinklig zu der Vertikalrichtung Z stellt eine horizontale Richtung dar.

Das mobile Transportsystem 10 weist eine zumindest annähernd quaderförmige Gestalt auf. Eine dem Boden abgewandte Oberfläche 80 des mobilen Transportsystems 10 erstreckt sich zumindest annähernd parallel zu dem Boden und damit rechtwinklig zu der Vertikalrichtung Z. Die Oberfläche 80 dient zur Aufnahme von zu transportierenden Gegenständen. Das mobile Transportsystem 10 umfasst eine Mehrzahl von Verkleidungsteilen und Abdeckungen, welche in der hier gezeigten Darstellung innenliegende Komponenten weitgehend verdecken.

Das mobile Transportsystem 10 weist eine Empfangseinheit 20 auf, zu welcher Energie induktiv von einer Ladeeinheit übertragbar ist. Die Ladeeinheit ist beispielsweise als linienförmiger Leiter oder als Spule ausgebildet. Die von der Ladeeinheit zu der Empfangseinheit 20 induktiv übertragene Energie dient beispielsweise zum Laden eines elektrischen Energiespeichers des mobilen Transportsystems 10. Die Empfangseinheit 20 befindet sich in einem zentralen Bereich an einer Frontseite des mobile Transportsystems 10.

Das mobile Transportsystem 10 weist ferner mehrere Laserscanner 25 auf. Die Laserscanner 25 sind insbesondere in einem Eckereich der Frontseite und einer Längsseite sowie in einem Eckereich einer Rückseite und einer Längsseite angeordnet. Die Laserscanner 25 dienen zur Erkennung von Hindernissen sowie zur Navigation des mobilen Transportsystems 10 innerhalb der technischen Anlage.

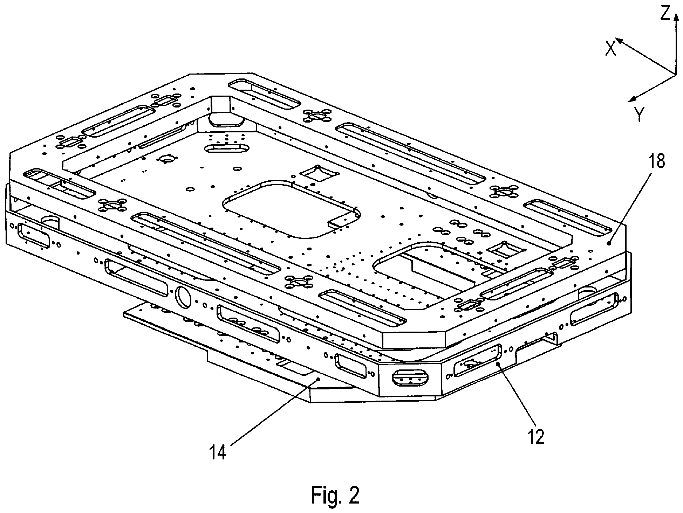

Figur 2 zeigt eine perspektivische Darstellung von Strukturteilen des mobilen Transportsystems 10. Das mobile Transportsystem 10 umfasst einen Unterrahmen 14, einen Mittelrahmen 12 und einen Oberrahmen 18. Die besagten Rahmen 12, 14, 18 sind verhältnismäßig flach ausgebildet und erstrecken sich vorwiegend in die Längsrichtung X sowie die Querrichtung Y. Die besagten Rahmen 12, 14, 18 weisen also jeweils nur eine verhältnismäßig geringe Ausdehnung in die Vertikalrichtung Z auf. Die Rahmen 12, 14, 18 sind in der Vertikalrichtung Z übereinander angeordnet.

Der Unterrahmen 14 ist dabei dem Boden zugewandt angeordnet. Der Oberrahmen 18 ist dem Boden abgewandt angeordnet. Der Mittelrahmen 12 ist in der Vertikalrichtung Z zwischen dem Unterrahmen 14 und dem Oberrahmen 18 angeordnet. Die besagten Rahmen 12, 14, 18 sind mechanisch miteinander verbunden, wie nachfolgend näher erläutert wird. Dabei ist der Oberrahmen 18 relativ zu dem Mittelrahmen 12 beweglich gelagert. Auch ist der Unterrahmen 14 relativ zu dem Mittelrahmen 12 beweglich gelagert.

Der Unterrahmen 14, der Mittelrahmen 12 und der Oberrahmen 18 sind jeweils aus eine Metall gefertigt. Die besagten Rahmen 12, 14, 18 weisen jeweils eine Vielzahl von Öffnungen und Durchbrüchen auf. Diese Öffnungen und Durchbrüche dienen teilweise zur Befestigung von Komponenten. Die Öffnungen und Durchbrüche verbessern ferner eine Luftzirkulation in dem mobilen Transportsystem 10 und verbessern somit die Abfuhr von Wärme.

Bei der Fertigung des mobilen Transportsystems 10 werden zunächst die einzelnen Rahmen 12, 14, 18 vorgefertigt. Dabei werden die jeweils erforderlichen Komponenten an den einzelnen Rahmen 12, 14, 18 montiert. Anschließend werden die vorgefertigten Rahmen 12, 14, 18 miteinander verbunden.

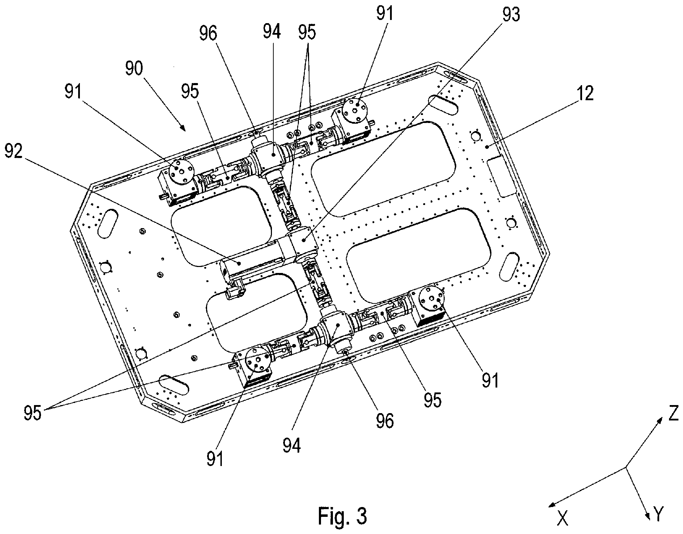

Figur 3 zeigt eine perspektivische Darstellung einer Hubeinheit 90 des mobilen Transportsystems 10. Die Hubeinheit 90 umfasst mehrere Komponenten, welche mit dem Mittelrahmen 12 verbunden sind. Die Hubeinheit 90 ist auf einer dem Oberrahmen 18 zugewandten Seite des Mittelrahmens 12 angeordnet. Über die besagte Hubeinheit 90 ist der hier nicht dargestellte Oberrahmen 18 mit dem Mittelrahmen 12 verbunden. Mittels der Hubeinheit 90 ist der Oberrahmen 18 relativ zu dem Mittelrahmen 12 in die Vertikalrichtung Z bewegbar.

Die Hubeinheit 90 weist mehrere, vorliegend vier, Hubvorrichtungen 91 auf. Jede der Hubvorrichtungen 91 umfasst jeweils eine Spindel und eine Spindelmutter, welche relativ zu der Spindel um eine Mittelachse drehbar ist. Die Spindeln und Spindelmuttern der Hubvorrichtungen 91 sind in dieser Darstellung verdeckt. Die Mittelachsen der Spindeln der Hubvorrichtungen 91 verlaufen parallel zueinander in die Vertikalrichtung Z. Die Hubvorrichtungen 91 umfassen jeweils ein Gehäuse, in welchem die Spindelmutter angeordnet ist. Die besagten Gehäuse der Hubvorrichtungen 91 sind jeweils fest mit dem Mittelrahmen 12 verbunden.

An den dem Mittelrahmen 12 abgewandten Enden der Spindeln ist jeweils ein Befestigungsflansch angebracht. Die Befestigungsflansche dienen zur Befestigung der Hubvorrichtungen 91 mit dem hier nicht dargestellte Oberrahmen 18. Durch eine Drehung der Spindelmuttern um die Mittelachsen erfahren die Spindeln eine translatorische Bewegung in die Vertikalrichtung Z. Dadurch werden auch die Befestigungsflansche und der Oberrahmen 18 in die Vertikalrichtung Z bewegt.

Die Hubeinheit 90 umfasst ferner einen Hubmotor 92, ein zentrales Getriebe 93, zwei seitliche Getriebe 94 und mehrere, vorliegend sechs, Verbindungswellen 95. Der Hubmotor 92 ist mit dem Mittelrahmen 12 fest verbunden. Eine Abtriebswelle des Hubmotors 92 rotiert um eine Achse, die zumindest annähernd in Längsrichtung X verläuft, und treibt dabei das zentrale Getriebe 93 an.

Das zentrale Getriebe 93 ist mit dem Mittelrahmen 12 fest verbunden. Die seitlichen Getriebe 94 sind ebenfalls mit dem Mittelrahmen 12 fest verbunden. Die seitlichen Getriebe 94 sind jeweils über eine Verbindungswelle 95 mit dem zentralen Getriebe 93 gekoppelt. Die besagten Verbindungswellen 95 sind dabei an gegenüberliegenden Seiten des zentralen Getriebes 93 angebracht. Die besagten Verbindungswellen 95 verlaufen jeweils in der Querrichtung Y von dem zentralen Getriebe 93 bis zu den seitlichen Getrieben 94.

Die seitlichen Getriebe 94 sind jeweils über zwei Verbindungswellen 95 mit jeweils zwei der Hubvorrichtungen 91 gekoppelt. Die besagten Verbindungswellen 95 sind dabei an gegenüberliegenden Seiten der seitlichen Getriebe 94 angebracht. Die besagten Verbindungswellen 95 verlaufen jeweils in der Längsrichtung X von den seitlichen Getrieben 94 bis zu den Hubvorrichtungen 91.

Das zentrale Getriebe 93 überträgt die Drehung der Abtriebswelle des Hubmotors 92 über die zwei Verbindungswellen 95, welche in der Querrichtung Y verlaufen, zu den beiden seitlichen Getrieben 94. Die beiden seitlichen Getriebe 94 übertragen die besagte Drehung jeweils über zwei Verbindungswellen 95, welche in der Längsrichtung X verlaufen, zu den Hubvorrichtungen 91, insbesondere auf die Spindelmuttern der Hubvorrichtungen 91.

Wenn die Abtriebswelle des Hubmotors 92 rotiert, so werden die Spindelmuttern der Hubvorrichtungen 91 über die Getriebe 93, 94 und die Verbindungswellen 95 rotatorisch angetrieben. Dadurch erfahren die Spindeln, wie bereits erwähnt eine translatorische Bewegung in die Vertikalrichtung Z. Dadurch werden auch die Befestigungsflansche und der Oberrahmen 18 in die Vertikalrichtung Z bewegt.

Die Hubeinheit 90 umfasst ferner zwei Ausgangswellen 96. Die Ausgangswellen 96 sind jeweils mit einem der seitlichen Getriebe 94 gekoppelt. Die besagten Ausgangswellen 96 sind jeweils an den Seiten der seitlichen Getriebe 94 angebracht, welche dem zentrale Getriebe 93 gegenüberliegen. Die Ausgangswellen 96 verlaufen jeweils in der Querrichtung Y und durchgreifen jeweils eine dafür vorgesehene Öffnung in dem Mittelrahmen 12. Die Ausgangswellen 96 sind somit außerhalb des Mittelrahmens 12 zugänglich und beispielsweise mittels Handkurbeln oder Akkuschraubern antreibbar.

Wenn die Ausgangswellen 96 rotatorisch angetrieben werden, so werden die Spindelmuttern der Hubvorrichtungen 91 über die seitlichen Getriebe 94 und die Verbindungswellen 95 rotatorisch angetrieben. Dadurch erfahren die Spindeln, wie bereits erwähnt eine translatorische Bewegung in die Vertikalrichtung Z. Dadurch werden auch die Befestigungsflansche und der Oberrahmen 18 in die Vertikalrichtung Z bewegt.

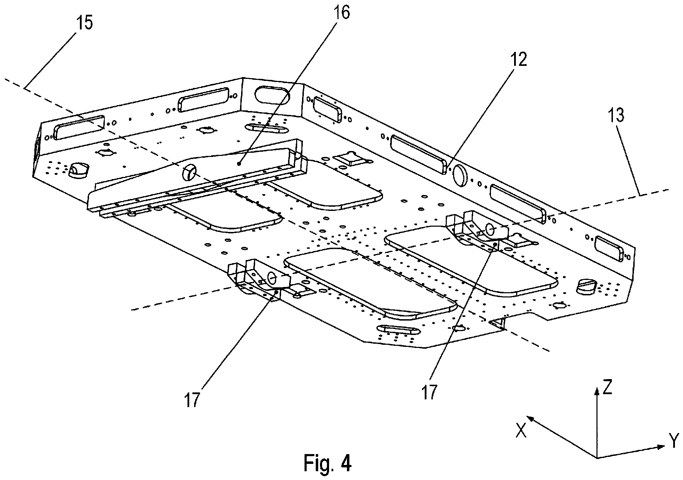

Figur 4 zeigt eine perspektivische Darstellung eines Mittelrahmens 12 des mobilen Transportsystems 10. In dieser Darstellung ist eine dem Oberrahmen 18 abgewandten Seite des Mittelrahmens 12 gezeigt. Ein Kipphebel 16 ist um eine Kippachse 15 relativ zu dem Mittelrahmen 12 schwenkbar. Die Kippachse 15 verläuft dabei in die Längsrichtung X auf der dem Oberrahmen 18 abgewandten Seite des Mittelrahmens 12.

Zwei Pendelhebel 17 sind um eine gemeinsame Pendelachse 13 relativ zu dem Mittelrahmen 12 schwenkbar. Die Pendelachse 13 verläuft dabei in die Querrichtung Y auf der dem Oberrahmen 18 abgewandten Seite des Mittelrahmens 12. Der hier nicht dargestellte Unterrahmen 14 ist an den Pendelhebeln 17 befestigt. Der Unterrahmen 14 ist somit um die Pendelachse 13 relativ zu dem Mittelrahmen 12 schwenkbar.

Die Kippachse 15 und die Pendelachse 13 verlaufen somit rechtwinklig zueinander. Die Kippachse 15 und die Pendelachse 13 liegen in der Vertikalrichtung Z in einer Ebene. Somit schneiden sich die Kippachse 15 und die Pendelachse 13.

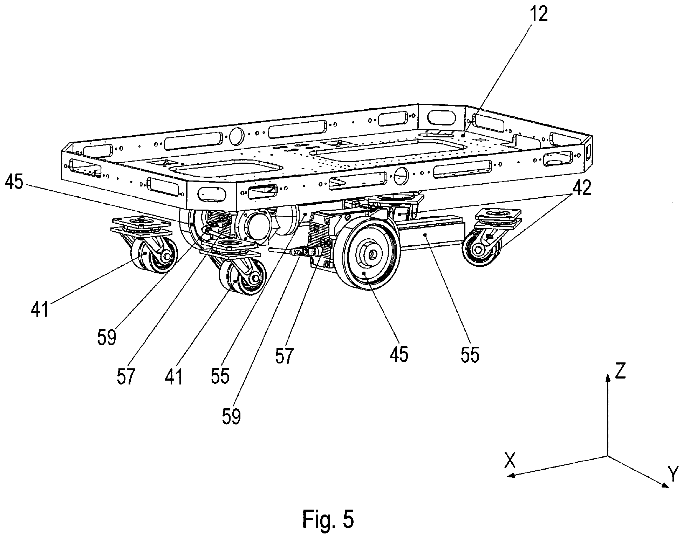

Figur 5 zeigt eine perspektivische Darstellung eines Fahrwerks des mobilen Transportsystems 10. Der Unterrahmen 14, der Kipphebel 16 ist und die Pendelhebel 17 sind dabei nicht dargestellt. Auch die Hubeinheit 90 ist nicht dargestellt. Das mobile Transportsystem 10 befindet sich dabei auf einem ebenen Boden.

An dem hier nicht dargestellten Kipphebel 16 sind zwei erste Stützräder 41 befestigt. Die ersten Stützräder 41 sind in der Querrichtung Y versetzt zueinander angeordnet. Die ersten Stützräder 41 weisen jeweils zwei nebeneinander angeordnete Rollen auf. Die ersten Stützräder 41 sind jeweils um eine in die Vertikalrichtung Z verlaufende erste Schwenkachse relativ zu dem Kipphebel 16 schwenkbar. Die ersten Stützräder 41 sind ferner jeweils um eine in eine horizontale Richtung verlaufende erste Drehachse relativ zu dem Kipphebel 16 drehbar gelagert. Die erste Schwenkachse und die erste Drehachse eines ersten Stützrades 41 schneiden sich vorliegend nicht. In Abhängigkeit von einer Schwenkung der ersten Stützräder 41 um die erste Schwenkachse verlaufen die ersten Drehachsen beispielsweise in Längsrichtung X, in Querrichtung Y oder in eine andere horizontale Richtung.

An dem hier nicht dargestellten Unterrahmen 14 sind zwei zweite Stützräder 42 befestigt. Die zweiten Stützräder 42 sind in der Querrichtung Y versetzt zueinander angeordnet. Die zweiten Stützräder 42 weisen jeweils zwei nebeneinander angeordnete Rollen auf. Die zweiten Stützräder 42 sind jeweils um eine in die Vertikalrichtung Z verlaufende zweite Schwenkachse relativ zu dem Unterrahmen 14 schwenkbar. Die zweiten Stützräder 42 sind ferner jeweils um eine in eine horizontale Richtung verlaufende zweite Drehachse relativ zu dem Unterrahmen 14 drehbar gelagert. Die zweite Schwenkachse und die zweite Drehachse eines zweiten Stützrades 42 schneiden sich vorliegend nicht. In Abhängigkeit von einer Schwenkung der zweiten Stützräder 42 um die zweite Schwenkachse verlaufen die zweiten Drehachsen beispielsweise in Längsrichtung X, in Querrichtung Y oder in eine andere horizontale Richtung.

An dem hier nicht dargestellten Unterrahmen 14 sind ferner zwei Antriebsräder 45 befestigt. Die Antriebsräder 45 sind in der Querrichtung Y versetzt zueinander angeordnet. Die Antriebsräder 45 sind jeweils um eine in Querrichtung Y verlaufende Antriebsachse relativ zu dem Unterrahmen 14 drehbar gelagert. Die Antriebsachsen der Antriebsräder 45 fluchten vorliegend miteinander.

Das mobile Transportsystem 10 umfasst zwei Antriebsmotoren 55 und zwei Fahrgetriebe 57. Dabei sind jedem der Antriebsräder 45 jeweils ein Antriebsmotor 55 und ein Fahrgetriebe 57 zugeordnet. Mittels der Antriebsmotoren 55 sind die Antriebsräder 45 unabhängig voneinander antreibbar. Die Antriebsmotoren 55 treiben jeweils eines der Antriebsräder 45 über eines der Fahrgetriebe 57 rotatorisch an. Das mobile Transportsystem 10 umfasst ferner einen hier nicht dargestellten elektrischen Energiespeicher zur Versorgung der Antriebsmotoren 55. Das mobile Transportsystem 10 umfasst auch eine hier nicht dargestellte Steuereinrichtung zur Steuerung der Antriebsmotoren 55.

An jedem der Fahrgetriebe 57 ist jeweils ein Freigabehebel 59 angebracht. Mittels des Freigabehebels 59 ist das jeweilige Fahrgetriebe 57 mechanisch von dem zugehörigen Antriebsmotor 55 trennbar, sowie mit dem zugehörigen Antriebsmotor 55 mechanisch koppelbar. Wenn einer der Antriebsmotoren 55 von dem zugehörigen Fahrgetriebe 57 getrennt ist, so ist das zugeordnete Antriebsrad 45 frei drehbar.

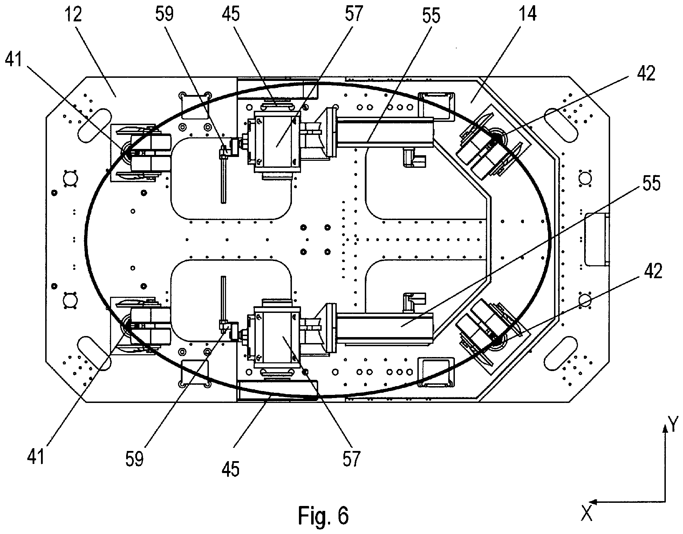

Figur 6 zeigt eine Ansicht einer Unterseite des mobilen Transportsystems 10. Der Unterrahmen 14 ist dabei semitransparent dargestellt. Der Kipphebel 16 ist nicht dargestellt. Ein Abstand der Antriebsräder 45 zueinander in Querrichtung Y ist größer als ein Abstand der ersten Stützräder 41 zueinander in Querrichtung Y. Ein Abstand der Antriebsräder 45 zueinander in Querrichtung Y ist auch größer als ein Abstand der zweiten Stützräder 42 zueinander in Querrichtung Y. Die sechs Räder 41, 42, 45 sind vorliegend in Form einer Ellipse angeordnet. Die besagte Ellipse ist symmetrisch zu einer Längsachse ausgebildet, welche in die Längsrichtung X verläuft.

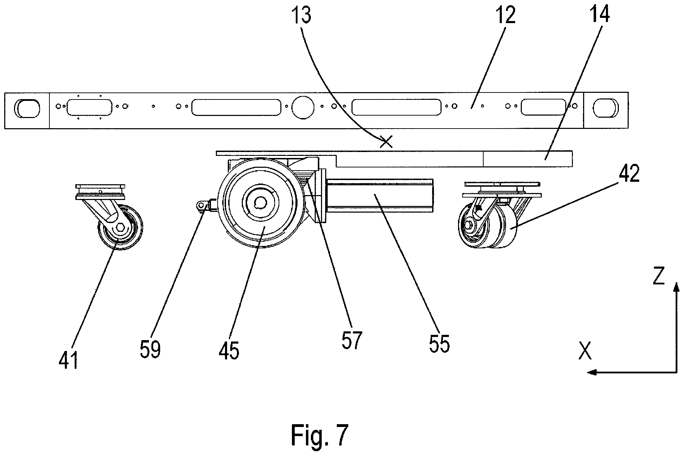

Figur 7 zeigt eine Seitenansicht des Fahrwerks des mobilen Transportsystems 10. Der Kipphebel 16 sowie die Pendelhebel 17 sind dabei nicht dargestellt. Die ersten Stützräder 41 sind mittels hier nicht dargestellter Adapter an dem Kipphebel 16 befestigt. Die zweiten Stützräder 42 sind mittels hier nicht dargestellter Adapter an dem Unterrahmen 14 befestigt.

Die Antriebsräder 45 sind in der Längsrichtung X zwischen den ersten Stützrädern 41 und den zweiten Stützrädern 42 angeordnet. Die Pendelachse 13 befindet sich in der Längsrichtung X zwischen den Antriebsrädern 45 und den zweiten Stützrädern 42.

Vorliegend ist ein Abstand der zweiten Stützräder 42 in Längsrichtung X zu der Pendelachse 13 annähernd gleich einem Abstand der Antriebsräder 45 in Längsrichtung X zu der Pendelachse 13. Der Abstand der zweiten Stützräder 42 zu der Pendelachse 13 in Längsrichtung X entspricht dabei dem Abstand der zweiten Schwenkachsen zu der Pendelachse 13 in Längsrichtung X. Der Abstand der Antriebsräder 45 zu der Pendelachse 13 in Längsrichtung X entspricht dem Abstand der Antriebsachsen zu der Pendelachse 13 in Längsrichtung X.

Vorliegend ist ein Abstand der zweiten Stützräder 42 in Längsrichtung X zu den Antriebsrädern 45 größer als ein Abstand der ersten Stützräder 41 in Längsrichtung X zu den Antriebsrädern 45. Der Abstand der ersten Stützräder 41 zu den Antriebsrädern 45 in Längsrichtung X entspricht dem Abstand der ersten Schwenkachsen zu den Antriebsachsen in Längsrichtung X. Der Abstand der zweiten Stützräder 42 zu den Antriebsrädern 45 in Längsrichtung X entspricht dem Abstand der zweiten Schwenkachsen zu den Antriebsachsen in Längsrichtung X.

Vorliegend entspricht ein Abstand der ersten Stützräder 41 in Längsrichtung X zu den Antriebsrädern 45 etwa 40% des Abstandes der ersten Stützräder 41 in Längsrichtung X zu den zweiten Stützrädern 42. Vorliegend entspricht ein Abstand der zweiten Stützräder 42 in Längsrichtung X zu den Antriebsrädern 45 etwa 60% des Abstandes der ersten Stützräder 41 in Längsrichtung X zu den zweiten Stützrädern 42. Der Abstand der ersten Stützräder 41 zu den zweiten Stützrädern 42 in Längsrichtung X entspricht dem Abstand der ersten Schwenkachsen zu den zweiten Schwenkachsen in Längsrichtung X.

### Bezugszeichenliste

- 10: Mobiles Transportsystem
- 12: Mittelrahmen
- 13: Pendelachse
- 14: Unterrahmen
- 15: Kippachse
- 16: Kipphebel
- 17: Pendelhebel
- 18: Oberrahmen
- 20: Empfangseinheit
- 25: Laserscanner
- 41: erstes Stützrad
- 42: zweites Stützrad
- 45: Antriebsrad
- 55: Antriebsmotor
- 57: Fahrgetriebe
- 59: Freigabehebel
- 80: Oberfläche
- 90: Hubeinheit
- 91: Hubvorrichtung
- 92: Hubmotor
- 93: zentrales Getriebe
- 94: seitliches Getriebe
- 95: Verbindungswelle
- 96: Ausgangswelle
- X: Längsrichtung
- Y: Querrichtung
- Z: Vertikalrichtung

## Patentansprüche

1. Mobiles Transportsystem (10), zum Transport von Gegenständen in einer technischen Anlage, umfassend
einen Mittelrahmen (12),
ein Paar erste Stützräder (41),
ein Paar zweite Stützräder (42),
ein Paar Antriebsräder (45) und
einen Unterrahmen (14), welcher um eine in Querrichtung (Y) verlaufende Pendelachse (13) relativ zu dem Mittelrahmen (12) schwenkbar ist,
wobei
die Antriebsräder (45) an dem Unterrahmen (14) befestigt sind,
die zweiten Stützräder (42) an dem Unterrahmen (14) befestigt sind, und
die ersten Stützräder (41) an einem Kipphebel (16) befestigt sind,
welcher um eine in Längsrichtung (X) verlaufende Kippachse (15) relativ zu dem Mittelrahmen (12) schwenkbar ist, und **dadurch gekennzeichnet, dass**
ein Abstand der zweiten Stützräder (42) in Längsrichtung (X) zu den Antriebsrädern (45) größer als ein Abstand der ersten Stützräder (41) in Längsrichtung (X) zu den Antriebsrädern (45) ist.

2. Mobiles Transportsystem (10) nach Anspruch 1,
**dadurch gekennzeichnet, dass**
die ersten Stützräder (41) in Querrichtung (Y) versetzt zueinander angeordnet sind, und/oder
dass die zweiten Stützräder (42) in Querrichtung (Y) versetzt zueinander angeordnet sind.

3. Mobiles Transportsystem (10) nach einem der vorangegangenen Ansprüche,
**dadurch gekennzeichnet, dass**
die ersten Stützräder (41) jeweils um eine in Vertikalrichtung (Z) verlaufende Schwenkachse relativ zu dem Kipphebel (16) schwenkbar und
um eine in eine horizontale Richtung verlaufende Drehachse relativ zu dem Kipphebel (16) drehbar gelagert sind.

4. Mobiles Transportsystem (10) nach einem der vorangegangenen Ansprüche,
**dadurch gekennzeichnet, dass**
die zweiten Stützräder (42) jeweils um eine in Vertikalrichtung (Z) verlaufende Schwenkachse relativ zu dem Unterrahmen (14) schwenkbar und
um eine in eine horizontale Richtung verlaufende Drehachse relativ zu dem Unterrahmen (14) drehbar gelagert sind.

5. Mobiles Transportsystem (10) nach einem der vorangegangenen Ansprüche,
**dadurch gekennzeichnet, dass**
an den ersten Stützrädern (41) und/oder an den zweiten Stützrädern (42) jeweils eine Bremseinrichtung angeordnet ist, mittels welcher eine Drehung des jeweiligen Stützrades (41, 42) um eine in horizontale Richtung verlaufende Drehachse bremsbar ist.

6. Mobiles Transportsystem (10) nach einem der vorangegangenen Ansprüche,
**dadurch gekennzeichnet, dass**
die Antriebsräder (45) jeweils um eine in Querrichtung (Y) verlaufende Antriebsachse relativ zu dem Unterrahmen (14) drehbar gelagert und von Antriebsmotoren (55) unabhängig voneinander antreibbar sind.

7. Mobiles Transportsystem (10) nach einem der vorangegangenen Ansprüche,
**dadurch gekennzeichnet, dass**
das mobile Transportsystem (10) einen ersten Winkelmesser zur Erfassung eines Schwenkwinkels des Unterrahmens (14) um die Pendelachse (13) relativ zu dem Mittelrahmen (12) aufweist.

8. Mobiles Transportsystem (10) nach einem der vorangegangenen Ansprüche,
**dadurch gekennzeichnet, dass**
das mobile Transportsystem (10) einen zweiten Winkelmesser zur Erfassung eines Schwenkwinkels des Kipphebels (16) um die Kippachse (15) relativ zu dem Mittelrahmen (12) aufweist.

9. Mobiles Transportsystem (10) nach einem der vorangegangenen Ansprüche,
**dadurch gekennzeichnet, dass**
die Antriebsräder (45) in Längsrichtung (X) zwischen den ersten Stützrädern (41) und den zweiten Stützrädern (42) angeordnet sind.

10. Mobiles Transportsystem (10) nach einem der vorangegangenen Ansprüche,
**dadurch gekennzeichnet, dass**
das mobile Transportsystem (10) eine Empfangseinheit (20) aufweist, zu welcher Energie induktiv von einer Ladeeinheit übertragbar ist.

## Claims

1. A mobile transport system (10) for transporting objects in a technical facility, comprising
a middle frame (12),
a pair of first support wheels (41),
a pair of second support wheels (42),
a pair of drive wheels (45) and
a lower frame (14) which is pivotable relative to the middle frame (12) about a swing axis (13) running in a transverse direction (Y),
wherein
the drive wheels (45) are secured to the lower frame (14),
the second support wheels (42) are secured to the lower frame (14), and
the first support wheels (41) are secured to a rocker lever (16) which is pivotable relative to the middle frame (12) about a tilt axis (15) running in a longitudinal direction (X), and **characterised in that**
a distance of the second support wheels (42) in a longitudinal direction (X) from the drive wheels (45) is greater than a distance of the first support wheels (41) in a longitudinal direction (X) from the drive wheels (45).

2. A mobile transport system (10) according to claim 1,
**characterised in that**
the first support wheels (41) are arranged offset from one another in a transverse direction (Y), and/or **in that** the second support wheels (42) are arranged offset from one another in a transverse direction (Y).

3. A mobile transport system (10) according to any one of the preceding claims,
**characterised in that**
the first support wheels (41) are in each case mounted so as to be pivotable relative to the rocker lever (16) about a pivot axis running in a vertical direction (Z) and so as to be rotatable relative to the rocker lever (16) about a rotational axis running in a horizontal direction.

4. A mobile transport system (10) according to any one of the preceding claims,
**characterised in that**
the second support wheels (42) are in each case mounted so as to be pivotable relative to the lower frame (14) about a pivot axis running in a vertical direction (Z) and so as to be rotatable relative to the lower frame (14) about a rotational axis running in a horizontal direction.

5. A mobile transport system (10) according to any one of the preceding claims,
**characterised in that**
at the first support wheels (41) and/or at the second support wheels (42) there is in each case arranged a braking device by means of which there can be braked a rotation of the respective support wheel (41, 42) about a rotational axis running in a horizontal direction.

6. A mobile transport system (10) according to any one of the preceding claims,
**characterised in that**
the drive wheels (45) are in each case rotatably mounted relative to the lower frame (14) about a drive axis, running in a transverse direction (Y), and drivable independently of one another by drive motors (55).

7. A mobile transport system (10) according to any one of the preceding claims,
**characterised in that**
the mobile transport system (10) has a first angle measuring means for detecting a pivot angle of the lower frame (14) relative to the middle frame (12) about the swing axis (13).

8. A mobile transport system (10) according to any one of the preceding clams,
**characterised in that**
the mobile transport system (10) has a second angle measuring means for detecting a pivot angle of the rocker lever (16) relative to the middle frame (12) about the tilt axis (15).

9. A mobile transport system (10) according to any one of the preceding claims,
**characterised in that**
the drive wheels (45) are arranged between the first support wheels (41) and the second support wheels (42) in a longitudinal direction (X).

10. A mobile transport system (10) according to any one of the preceding claims,
**characterised in that**
the mobile transport system (10) has a receiving unit (20) to which energy can be transmitted inductively from a charging unit.

## Revendications

1. Système mobile de transport (10) conçu pour transporter des objets dans une installation technique, comprenant
un châssis intermédiaire (12),
une paire de premières roues d'appui (41),
une paire de secondes roues d'appui (42),
une paire de roues menantes (45) et
un châssis inférieur (14) apte à pivoter, par rapport audit châssis intermédiaire (12), autour d'un axe pendulaire (13) s'étendant dans la direction transversale (Y),
sachant
que les roues menantes (45) sont fixées au châssis inférieur (14),
que les secondes roues d'appui (42) sont fixées audit châssis inférieur (14), et
que les premières roues d'appui (41) sont fixées à un levier basculant (16) apte à pivoter, par rapport au châssis intermédiaire (12), autour d'un axe de basculement (15) s'étendant dans la direction longitudinale (X), **caractérisé par le fait**
**qu'**une distance comprise entre les secondes roues d'appui (42) et les roues menantes (45), dans la direction longitudinale (X), est supérieure à une distance comprise entre les premières roues d'appui (41) et lesdites roues menantes (45) dans ladite direction longitudinale (X).

2. Système mobile de transport (10) selon la revendication 1,
**caractérisé par le fait que**
les premières roues d'appui (41) sont agencées avec décalage mutuel dans la direction transversale (Y) ; et/ou
**par le fait que** les secondes roues d'appui (42) sont agencées avec décalage mutuel dans ladite direction transversale (Y).

3. Système mobile de transport (10) selon l'une des revendications précédentes,
**caractérisé par le fait que**
les premières roues d'appui (41) peuvent pivoter à chaque fois, par rapport au levier basculant (16), autour d'un axe de pivotement s'étendant dans la direction verticale (Z) et
sont montées à rotation, par rapport audit levier basculant (16), autour d'un axe de rotation s'étendant dans une direction horizontale.

4. Système mobile de transport (10) selon l'une des revendications précédentes,
**caractérisé par le fait que**
les secondes roues d'appui (42) peuvent pivoter à chaque fois, par rapport au châssis inférieur (14), autour d'un axe de pivotement s'étendant dans la direction verticale (Z) et
sont montées à rotation, par rapport audit châssis inférieur (14), autour d'un axe de rotation s'étendant dans une direction horizontale.

5. Système mobile de transport (10) selon l'une des revendications précédentes,
**caractérisé par le fait**
**qu'**un dispositif respectif de freinage, permettant de freiner une rotation de la roue d'appui (41, 42) considérée, autour d'un axe de rotation s'étendant dans une direction horizontale, est implanté sur les premières roues d'appui (41) et/ou sur les secondes roues d'appui (42).

6. Système mobile de transport (10) selon l'une des revendications précédentes,
**caractérisé par le fait que**
les roues menantes (45) sont respectivement montées à rotation par rapport au châssis inférieur (14), autour d'un axe d'entraînement s'étendant dans la direction transversale (Y), et peuvent être entraînées par des moteurs d'entraînement (55), indépendamment les unes des autres.

7. Système mobile de transport (10) selon l'une des revendications précédentes,
**caractérisé par le fait que**
ledit système mobile de transport (10) est muni d'un premier mesureur d'angles affecté à la détection d'un angle de pivotement du châssis inférieur (14), autour de l'axe pendulaire (13), par rapport au châssis intermédiaire (12).

8. Système mobile de transport (10) selon l'une des revendications précédentes,
**caractérisé par le fait que**
ledit système mobile de transport (10) est pourvu d'un second mesureur d'angles dévolu à la détection d'un angle de pivotement du levier basculant (16), autour de l'axe de basculement (15), par rapport au châssis intermédiaire (12).

9. Système mobile de transport (10) selon l'une des revendications précédentes,
**caractérisé par le fait que**
les roues menantes (45) sont interposées entre les premières roues d'appui (41) et les secondes roues d'appui (42) dans la direction longitudinale (X).

10. Système mobile de transport (10) selon l'une des revendications précédentes,
**caractérisé par le fait que**
ledit système mobile de transport (10) est doté d'une unité réceptrice (20), à laquelle de l'énergie peut être transmise inductivement par une unité de mise en charge.
